# EUROPEAN PATENT SPECIFICATION

(11) **EP 3 673 017 B1**
(45) Date of publication and mention of the grant of the patent: **24.01.2024**
(21) Application number: 18828269.3
(22) Date of filing: 24.05.2018
(51) Int. Cl.: C09D 5/00, C09D 1/00

(54) **A FROSTED GLASS ARTICLE**
MATTIERTER GLASARTIKEL
ARTICLE EN VERRE DÉPOLI

(30) Priority: 04.07.2017 IN 201741023457
(43) Date of publication of application: 01.07.2020
(73) Proprietor: SAINT-GOBAIN GLASS FRANCE, 92400 Courbevoie (FR)
(72) Inventor: JAIN, Kamiya, Chennai - 600041 Tamil Nadu (IN); ROY, Biplab Kumar, Chennai - 600097 Tamil Nadu (IN)
(74) Representative: Saint-Gobain Recherche
(86) International application number: PCT/IN2018/050331
(87) International publication number: WO 2019/008596

(56) References cited:
- EP-A1- 1 024 180
- EP-A1- 1 024 180
- EP-A1- 2 873 709
- EP-B1- 1 885 810
- WO-A1-2012/030224
- JP-A- 2010 195 618
- US-B2- 9 017 781

## Description

### Technical Field

The present disclosure relates, in general to a glass article, and more specifically to a frosted glass article and a method of making the same.

### Background

Glass having a frosty finish on one or both of its surfaces is increasingly being used in numerous interior design applications in both residential and commercial settings such as doors, shower screens, partitions, interior screens, furnitures etc. to obtain visual privacy while allowing light transmission at the same time. Although frosting of glass is extremely decorative, frosting is not done for aesthetics alone. Such frosted glass can also be utilized as a light diffusion layer to reduce glare when used in facades.

Conventionally, to obtain a frosty finish on the surface of a glass, a method is used in which the surface is etched with a hydrofluoric acid solution with added salts such as ammonium fluoride, or a mixed solution of hydrofluoric acid and sulfuric acid with added salts such as ammonium fluoride. Alternatively, the surface of the glass can also be sand blasted by eroding the glass by violently projecting sand upon its surface by means of a current of air or steam. These methods render the glass surfaces microscopically rough and translucent by scattering light during transmission thus blurring the images while still transmitting light.

Although these methods provide a fine frosted surface, the use of a strong acid, such as hydrofluoric acid as an etching agent, makes the handling of agents difficult and requires many steps of washing with an acid and water. Thus there are problems such as treatment of acidic waste water and others in respect of safety, environments, productivity, costs and the like. On the other hand, usage of sand risks development of lung diseases and poses harm to the naked skin and eye.

European patent number 1885810 discloses a method of using a frost coating including thermoset acrylic resin, polymethyl methacrylate, polyacrylate copolymer, methylated melamine-formaldehyde resin and optionally, UV absorbent material and/or light stabilized material. This method of frosting avoids the use of harmful agents. However, the frosting composition is complex in nature and may not provide surface roughness similar to conventional etched glass. Further such multicomponent system can be difficult to apply on glass in various conventional commercial coating processes.

Frost-coating composition comprising a hydrophobic silica particle and photo-curable polymer is disclosed in European patent number 1024180. This composite composition may not be cost-effective due to the use of photo-curable polymer particles. U.S. patent number 9017781 describes a matting and/or frosting additive concentrate for polymers comprising hollow glass microspheres and waxy carrier material. This method imparts a hazy glass-like appearance on a plastic body.

JP 2010-195618 A discloses a decorative laminated glass. The decorative laminated glass is formed by sandwiching a decorative sheet between two glass plates with an adhesive layer interposed there between. The decorative sheet includes at least a pattern layer and a protective layer successively layered on a substrate. The protective layer is formed by crosslinking and curing an ionization radiation-curable resin composition.

EP 2873709 relates to a heat-ray shielding dispersion body and a heat-ray shielding body capable of transmitting a light of a visible light region and using a near-infrared shielding material having absorption in a near infrared region, and a method for producing them.

Although environment-friendly processes for etching glass surfaces exist in the prior art, none of them address the problem of losing haze when a frosted glass comes in contact with water or similar liquid which has a refractive index similar to glass (1.5). The frosted glass surfaces are commonly hydrophilic in nature and hence do not repel water. Further none of the prior art compositions attempt to control haziness of the frosted glass surface.

Thus there is a need for frost-coating compositions that are more hydrophobic and that which allow the frosted glass surfaces to maintain haziness even during contact with water droplets and for compositions that can control/ alter the degree of haze on the frosted glass surfaces.

The present disclosure relates to a coating composition that overcomes the above discussed disadvantages of the prior art and discloses a polymer-particle composite for frosting a glass substrate and a method for producing a frosted article using the polymer-particle composite. The frosted article of the present disclosure exhibits a higher contact angle and has a haze value that can be controlled by the polymer-particle composite.

### Summary of the Disclosure

In one aspect of the present disclosure, a frosted article as defined in claim 1 comprising a glass substrate and a coating composition applied directly on a surface of the glass substrate is disclosed. The coating composition comprises upto 50 parts by weight of an inorganic particle embedded in a polymer based on less than about 50 parts by weight of a solvent.

In another aspect of the present disclosure, a method of manufacturing a frosted article as defined in claim 13 is disclosed. The method comprises the steps of cleaning and polishing a glass substrate, pre-treating the glass substrate, coating a composition comprising upto 50 parts by weight of an inorganic particle embedded in a polymer based on less than about 50 parts by weight of a solvent over a surface of the glass substrate, drying the coated glass substrate and curing the coated glass substrate.

Other features and aspects of this disclosure will be apparent from the following description and the accompanying drawings.

### Brief Description of the Drawings

Embodiments are illustrated by way of example and are not limited to those shown in the accompanying figures.
FIG. 1 illustrates a frosted glass article, according to one embodiment of the present disclosure;
FIG. 2 illustrates light scattering effect of a frosted glass article, according to one embodiment of the present disclosure; and
FIG. 3 illustrates a flowchart for the method of manufacturing a frosted glass article, according to an embodiment of the present disclosure.

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### Detailed Description

Wherever possible, the same reference numbers will be used throughout the drawings to refer to the same or similar parts. Embodiments disclosed herein are related to a frosted glass article.

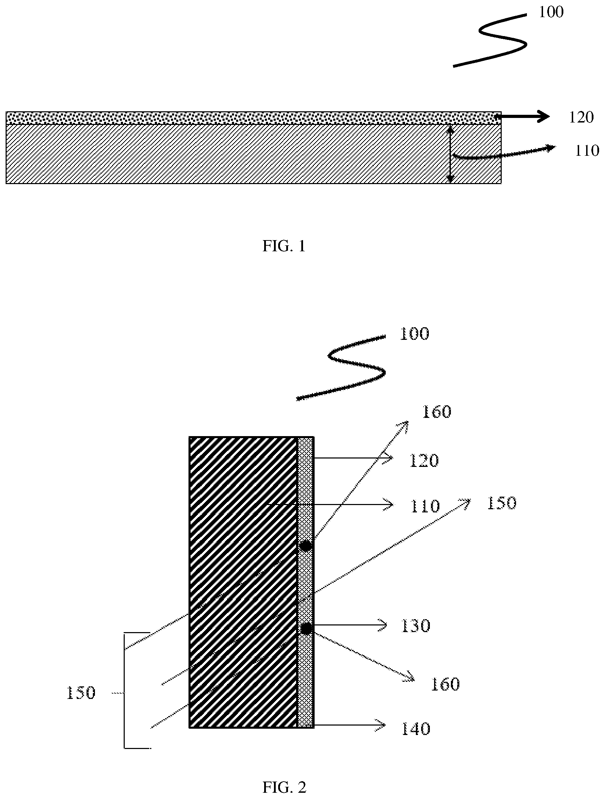

**FIG. 1** illustrates a frosted glass article 100, in accordance to an embodiment of the present disclosure. The frosted glass article 100 comprises of a glass substrate 110 coated with a frosting composition 120. In one embodiment of the present disclosure, the frosting composition 120 is coated on one surface of the glass substrate 110. In one other aspect of the embodiment, the frosting composition 120 is coated on two surfaces of the glass substrate 110. In another embodiment of the present disclosure, the frosting composition 120 covers at least 5% of the total surface area of the glass substrate 110.

The frosting composition 120 comprises of an inorganic particle embedded in a polymer dispersed in a solvent. In an alternate embodiment, the frosting composition 120 comprising UV curable polymers may not contain a solvent. The inorganic particle comprises of one or more compounds selected from titania, zirconia, silica, zirconium silicate, zinc oxide, zinc silicate, alumino-silicate, fumed silica, hollow glass bubbles, glass beads, glass flakes or their combinations thereof. In one specific embodiment, the inorganic particle is hollow glass bubble having an effective refractive index less than that of water and the polymer. In one embodiment of the present disclosure, the average size of the inorganic particle is greater than 50 nm and less than 50 microns.

According to one embodiment of the present disclosure, the polymer is selected from the group consisting of poly-acrylate, poly-urethane, poly-isocyanate, silicone, epoxy, phenol-formaldehyde resins, melamine formaldehyde, acrylic polyol or their combinations thereof. In one specific embodiment, the polymer is acrylic polyol and poly-isocyanate. In another specific embodiment, the polymer is acrylate and melamine formaldehyde. In yet another specific embodiment, the polymer is poly-urethane and hardener. In one aspect of the embodiment, the polymer is thermally curable or UV curable. According to one embodiment of the present disclosure, the solvent is selected from the group consisting of xylene, acetic acid, butyl acetate, isopropyl alcohol, toluene or diacetone alcohol.

In multiple embodiments of the present disclosure, the glass substrate 110 can be a clear glass substrate. In one other embodiment, the glass substrate 110 can be a tinted glass substrate. In an alternate embodiment of the present disclosure, organic color can also be added to the frosting composition 120 to produce a frosted glass article 100 having a tinted effect.

The frosted glass article 100 exhibits haziness on the surface of the glass substrate 110 that is applied with the frosting composition 120. This haziness is caused by the scattering of light rays incident on the frosted surface of the frosted glass article 100. The refractive indices of the polymer and the inorganic particle present in the frosting composition 120 vary considerably and hence the light scattered from the inorganic particle-polymer interface also varies considerably. The same is true for the glass-air interface of the hollow glass bubble. These differences in light scattering are illustrated in **FIG. 2****.** The frosting composition 120 comprises of the inorganic particles 130 and the polymer 140. When light ray 150 is made incident on the frosted article 100, the scattering of the light ray 150 varies depending on its point of contact on the frosted article 100. As illustrated in **FIG. 2** the light ray 150 incident on the inorganic particle 130 takes a different scattering route (scattered light ray 160), while the light ray 150 incident on the polymer 140 of the frosting composition 120 is not scattered. This causes the blur in the images of objects present on the other side of the frosted substrate.

In a particular embodiment, the frosting composition 120 comprises of hollow glass bubble (HGB). HGB is a spherical glass particle having an internal spherical porosity. The inner area of the glass particle is filled with air that has a refractive index equal to 1, while the outer annulus made of glass has a refractive index approximately equal to 1.5. Due to the difference in the refractive indices, these microspheres scatter light, causing haze. When these HGBs are immobilized over the glass substrate 110 with the help of polymer 140 the glass substrate 110 becomes frosted. In one other embodiment, the HGB are treated with surface modifying agents such as fluorosilanes. The fluorosilane modified HGB provides for better adhesion to the glass substrate and helps the frosted glass article 100 to achieve better easy-to-clean properties.

### Example 1

In an embodiment of the present disclosure, the hollow glass bubbles (HBGs) are used as the inorganic particle. Frosting compositions using different amounts of HBGs as the inorganic particle were prepared in polymer systems viz., poly-urethane-hardener (PS-1), acrylate-melamine formaldehyde (PS-2) and acrylate polyol-isocyanate (PS-3). The cleaned and polished glass sheets were pre-treated with silane (methoxy-, ethoxy-, amino-, phospho-, etc.) before coating. Varied amounts of HGBs were added to the polymer systems followed by the addition of hardener/ cross-linker and were mixed by standard sheer mixing methods. Solvents were added to the formulations to adjust their viscosity. The wet-thickness of the frosting composition 120 ranges between 10 to 200 µm. Post curing, the dry thickness of the frosting composition 120 ranges between 10 to 100 µm. Optical characteristics namely, haze, total luminous transmittance (Tt), diffuse luminous transmittance (T_{d}) and parallel light transmittance (Tₚ) of 4 mm glass sheet coated with frosting compositions 120 comprising varied amounts of HGBs were measured and the results are tabulated in Table 1.

### Scratch Resistance Testing

The scratch resistance of the above samples was tested using the Universal Scratch tester with van Laar (0.5 mm) tip at different loads from 0.1 N to 5 N. The results obtained are tabulated in Table 1.

**Table 1: Optical characteristics and haze measurements of frosted compositions comprising different wt% of HGBs**

| | Coating Thickness (wet) | Haze % | Tt % | T_{d} % | Tₚ % | Scratch Resistance |
|---|---|---|---|---|---|---|
| Ultra-Clear Flat Glass | | 0.31 | 88.86 | 0.27 | 88.59 | |

| PS-1 | | | | | | |
|---|---|---|---|---|---|---|
| HGB (1wt%) | 100 µm | 16.16 | 84.62 | 13.68 | 70.95 | 1N |

| PS-2 | | | | | | |
|---|---|---|---|---|---|---|
| HGB (3wt%) | 100 µm | 20.27 | 82.47 | 16.54 | 65.92 | 1N |
| HGB (5wt%) | 100 µm | 20.21 | 77.75 | 15.72 | 63.02 | |

| PS-3 | | | | | | |
|---|---|---|---|---|---|---|
| HGB (3 wt%) | 51 µm | 13.96 | 83.04 | 11.59 | 71.45 | 2N |
| HGB (3 wt%) | 127 µm | 18.43 | 80.50 | 14.83 | 65.67 | 2N |
| HGB (10wt%) | 51 µm | 42.42 | 74.40 | 31.57 | 42.83 | 2N |
| HGB (20 wt%) | 51 µm | 75.28 | 67.98 | 51.17 | 16.81 | 3N |

It is evident from Table 1 that varying the percent of HGBs in the frosting composition 120 varies the haze % of the frosted glass article 100. Similarly coating thickness of the frosting composition 120 affects the haze % and the total luminous transmittance (Tₜ) of the frosted glass article 100. Frosting compositions, having similar wt% of HGBs, record different haze % when coated at different thicknesses on glass substrates. Frosting composition 120 in PS-2 can produce a haze value of 20 % while still maintaining Tₜ, and Tₚ values close to that of clear glass such that the glass article obtains the frosted effect while retaining most of its light transmittance and thus, obtaining a perfect balance between light transmittance value and haze %. In a specific embodiment, required concentration of HGB and thickness of the coating may be selected to achieve desired haze % and transmittance levels depending on the application of the frosted article. For example, a shower cubicle may require an increased haze % compared to an interior partition in a residential or commercial space.

### Example 2

In another embodiment, fumed silica is used as the inorganic particle. Required wt% of fumed silica was added to different polymer systems (namely, PS-1, PS-2 and PS-3). The frosting composition comprising fumed silica further comprises dispersing and/ or deflocculating agents. The mixing procedure, additives and glass substrate preparation were the same as that mentioned in example 1. The optical characteristics and scratch resistance of 4 mm glass sheets coated with frosting composition comprising fumed silica were measured and are tabulated in Table 2.

**Table 2: Optical characteristics and haze measurements of frosted compositions comprising fumed silica**

| | Coating Thickness (wet) | Haze % | Tt % | T_{d} % | Tₚ % | Scratch |
|---|---|---|---|---|---|---|
| Ultra-Clear Flat Glass | | 0.31 | 88.86 | 0.27 | 88.59 | |

| PS-2 | | | | | | |
|---|---|---|---|---|---|---|
| Fumed Silica (1 wt%) | 127 µm | 13.75 | 86.4 | 11.9 | 74.5 | 1N |

| PS-3 | | | | | | |
|---|---|---|---|---|---|---|
| Fumed Silica (5 wt%) | 51 µm | 19.88 | 91.2 | 18.1 | 73.1 | 3 N |

The haze % of the frosted glass article 100 obtained from a frosting composition can be controlled by varying the wt % of fumed silica present in the frosting composition and thickness of the frosting composition applied on the frosted glass article 100.

### Example 3

In another embodiment, a combination of fumed silica and HBGs are used as the inorganic particle. Required wt% of both these components were added to polymer system (PS-3). In an embodiment, HBG is wet-chemically treated with fluoro-silane solution to change the surface properties of HBGs, Treated HBGs were used in the place of original HBGs in a similar way. The mixing procedure, additives and glass substrate preparation were the same as that mentioned in example 1. The optical characteristics and scratch resistance of 4 mm glass sheets coated with frosting compositions comprising HBG and fumed silica were measured and are tabulated in Table 3.

**Table 3: Optical characteristics and haze measurements of frosted compositions comprising HGBs and fumed silica**

| | Coating Thickness (wet) | Haze % | Tt % | T_{d} % | Tₚ % | Scratch |
|---|---|---|---|---|---|---|
| Ultra-Clear Flat Glass | | 0.31 | 88.86 | 0.27 | 88.59 | |

| PS-3 | | | | | | |
|---|---|---|---|---|---|---|
| HGB (3 wt %) + fumed Silica (1 wt%) | 51 µm | 18.57 | 88.19 | 16.39 | 71.80 | 3 N |
| HGB (3 wt %) + fumed Silica (3 wt%) | 51 µm | 29.72 | 88.89 | 26.43 | 62.46 | 3 N |
| Fluorinated HGB (3 wt %) + fumed Silica (1 wt%) | 51 µm | 13.85 | 83.16 | 42.28 | 71.63 | 2N |

Table 1, Table 2 and Table 3 illustrate that a haze value of 13 to 75% can be achieved by controlling the composition and thickness of the frosting composition. This is particularly advantageous when frosted glass articles with different haze values are required for different applications. This is achieved without controlling etching bath or sand blasting conditions used for making conventional frosted glass articles. Furthermore, Table 3 illustrates that the combination of fumed silica with HGBs imparts an increased scratch resistance to the frosting composition.

### Example 4

In another embodiment of the present disclosure, frosting composition comprising only the polymer system and frosting compositions comprising only inorganic particle were coated on glass substrates and their haze values were measured and the results are tabulated in Table 4.

**Table 4: Haze value of frosting composition**

| | Polymer system | HGB | Haze |
|---|---|---|---|
| Conventional frosted glass | - | - | 88 |
| Sample 1 | 62% | - | 0.55 |
| Sample 2 | - | NA | - |
| Sample 3 | 60% | 2.5% | 14 |
| Sample 4 | 52% | 16% | 75 |

The results illustrate that an optimized quantity of the two components of the frosting composition viz., polymer and inorganic particle act synergistically to create a frosted effect on the glass substrate.

### Example 5

In one other embodiment of the present disclosure, haze value of the frosted glass article 100 were measure before and after contact of the frosted glass article 100 with water or similar liquid solutions and the results are tabulated in Table 5. While the conventional frosted article lost haze in wet conditions to become transparent, the frosted glass article 100 of the present invention retained its haze value.

**Table 5: Loss of Haze**

| Sample | Haze % (in dry state) | Haze % (in wet state) |
|---|---|---|
| Conventional Frosted glass | 88 | 0.3 |
| PS-3 with 20 wt% HGB | 75 | 75 |

### Durability Studies

### Persoz Pendulum Test

The coating hardness was measured with Persoz pendulum test. The pendulum hardness test is based on the principle that the amplitude of the pendulum's oscillation will decrease more quickly when supported on a softer surface. The Persoz test measured the time for the amplitude to decrease from 12° to 4°. Full details of this test are set out in international Standard ISO 1522-1998. In all the above example embodiments, the measured values were found to be in the range between 150 and 300 s.

### Adhesion Test

In all the above example embodiments, the adhesion of the frosting composition 120 on the glass substrate 110 were measured by cross-hatch (ASTM standard D 3359-00, 6 teeth, 2mm, with brushing and with adhesive tape peel). The adhe
sion values ranged between 0 and 1. The frosted glass article 100 of the present invention was also found to be resistant to delamination during glass cutting by snapping and edge-grinding.

### Condensation Test

To understand the effect of high humidity on the coatings, high humidity test was performed in a high humidity chamber at 50° C, 95% RH for 21 days, followed by comparison of optical characterization of the samples before and after high humidity test. A minimum difference of haze (<1%) and Tt (<1%) were observed in most of the embodiments. Further the frosted glass article 100 exhibits no loss in haze value while in contact with water or other liquids having a refractive index of 1.5.

### Comparative Example 1

### Water Droplet Contact Angle Measurements

The surface of the frosted glass article 100 was measured for water-droplet contact angle. The surface of an acid-etched frosted glass was also measured. The results are tabulated in Table 6.

**Table 6: Water-droplet Contact Angle Measurements**

| Samples | Avg. contact angle |
|---|---|
| Frosted Glass (Acid-etched) | 48.26 (±9.81) |

| PS-2 | |
|---|---|
| HGB (4 wt%) | 74.56 (±3.17) |
| HGB (3 wt%) | 71.71 (±4.65) |
| HGB (1.5 wt%) | 77.36 (±1.76) |
| Fumed silica (1 wt%) | 69.78 (±4.74) |

| PS-3 | |
|---|---|
| HGB (3 wt %) + fumed Silica (1 wt%) | 72.69 (±4.12) |
| HGB (3 wt %) + fumed Silica (3wt%) | 72.36 (±2.58) |
| Fluorinated HGB (3 wt %) + fumed Silica (1 wt%) | 76.11 (±2.30) |

It is evident that high contact angles of 69 ° - 78 ° are achieved from frosting compositions of the present disclosure. High contact angles indicate a higher hydrophobicity of the frosted glass article 100 of the present disclosure. This high contact angle imparts easy-to-clean and stain resistance properties to the frosted glass article 100 of the present disclosure. This also reduces the appearance of fingerprints, smudges and repels dirt build-up.

### Industrial Applicability

The frosted glass article 100 of the present disclosure can be used in commercial and residential buildings as partition walls, shower cubicles, furniture applications and light diffusing glasses, for example, cover for LED lighting. The frosted glass article 100 can further be used in wall cladding, curtain walling, cooktop and other furniture applications. Further the frosted glass article 100 of the present disclosure is prepared from an environmental-friendly green process that eliminates all risks involved in glass etching process. These frosted glass articles 100 are also cost-effective.

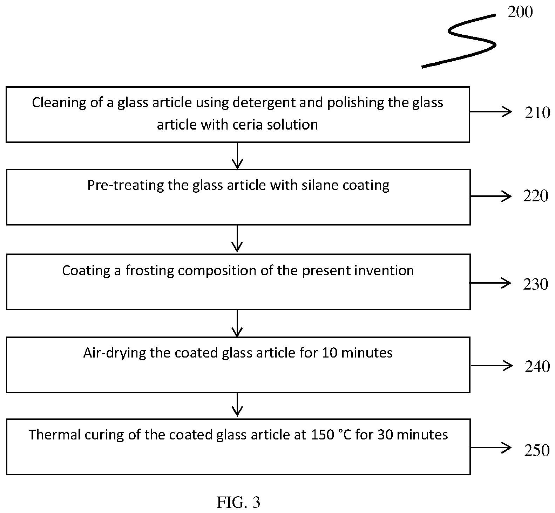

An exemplary method 200 for manufacturing a frosted glass article 100 according to one embodiment of the present disclosure is illustrated in a flowchart depicted in **FIG. 3****.** The method 200 involves steps 210 to 250. In an embodiment, the frosted glass article 100 of **FIG. 1** may be formed by implementing one or more steps of the method 200. The method 200 will be explained in conjunction with one or more components of the glass substrate 110. However, it may also be contemplated to implement the method 200 with other suitable articles without deviating from the scope of the present disclosure and/or necessary modifications to the described components of the glass substrate 110.

The method 200 comprises of step 210 that involves preparation of the glass substrate 110 by cleaning the glass substrate using detergents and polishing the cleaned glass substrate 110. In alternate embodiment of the present disclosure, the glass substrate 110 is cleaned using DI water or acetone. In one embodiment, the glass substrate 110 is polished using ceria or similar abrasive colloidal solution. The cleaning of the glass substrate 110 removes optical contamination from the glass substrate 110 and also enhances adhesion of the frosting composition 120 on the glass substrate 110 by removing contaminations and exposing fresh dangling bonds that promotes silanization.

In step 220 the cleaned and polished glass substrate 110 is pre-treated. In one embodiment of the present disclosure, a silane layer pre-coating is done on the glass substrate 110 to enhance the adhesion property of the glass substrate 110.

In step 230 a frosting composition of the present disclosure is applied on the pre-treated glass substrate 110. The frosting composition 120 is prepared by mixing the polymer in a solvent using shear mixing. Care is taken to reduce air bubbles during mixing. Entrapment of air-bubble causes unnecessary and uncontrolled porosity and surface roughness. Following which, the inorganic particle is added and mixed. In optional embodiments, suitable surfactants can also be added to the frosting composition 120. The surfactants ensure good dispersion of the inorganic particles in the polymer formulation. In other optional embodiments, suitable dispersant or flow- or functional additives can also be added to the frosting composition 120. In yet another optional embodiment, the frosting composition 120 also comprises of an organic dye to impart a tint to the frosted glass article 100.

In one embodiment of the present disclosure the frosting composition 120 is applied using knife-edge coating, Meyer rod coating, screen-printing, spray coating, Gravure coating, dip coating, slot-die coating, flood coating, curtain coating or roller coating. In one specific embodiment, the frosting composition 120 is coated using Meyer rod. In one exemplary embodiment, the wet-coating thickness of the frosting composition 120 is 50 µm.

In step 240 the glass substrate 110 coated with the frosting composition 120 is air-dried for about 10 minutes. In the final step 250 the air-dried coated glass substrate 110 is thermally cured at 150 °C for 20-30 minutes to obtain the frosted glass article 100 depicted in **FIG. 1****.**

Note that not all of the activities described above in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Certain features, that are for clarity, described herein in the context of separate embodiments, may also be provided in combination in a single embodiment. Conversely, various features that are, for brevity, described in the context of a single embodiment, may also be provided separately or in a sub combination. Further, reference to values stated in ranges includes each and every value within that range. Many other embodiments may be apparent to skilled artisans only after reading this specification. Other embodiments may be used and derived from the disclosure, such that a structural substitution, logical substitution, or another change may be made without departing from the scope of the disclosure. Accordingly, the disclosure is to be regarded as illustrative rather than restrictive.

The description in combination with the figures is provided to assist in understanding the teachings disclosed herein, is provided to assist in describing the teachings, and should not be interpreted as a limitation on the scope or applicability of the teachings. However, other teachings can certainly be used in this application.

As used herein, the terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent that certain details regarding specific materials and processing acts are not described, such details may include conventional approaches, which may be found in reference books and other sources within the manufacturing arts.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof.

### List of Elements

- 100: Frosted Glass Article
- 110: Glass Substrate
- 120: Frosting Composition
- 130: Inorganic Particle
- 140: Polymer
- 150: Light Rays
- 160: Scattered Light Ray
- 200: Method
- 210: Step
- 220: Step
- 230: Step
- 240: Step
- 250: Step

## Claims

1. A frosted article (100) comprising:
a glass substrate (110); and
a frosting composition (120) applied directly on at least one surface of the glass substrate (110), wherein the frosting composition (120) comprises upto 50 parts by weight of an inorganic particle (130) embedded in a polymer (140) based on less than about 50 parts by weight of a solvent, **characterized in that** said polymer (140) is selected from the group consisting of poly-acrylate, poly-urethane, poly-isocyanate, silicone, epoxy, olefins, esters phenol-formaldehyde resins, phenols, amines, carboxylic acids, anhydrides melamine formaldehyde, polyols, acrylic polyol or their combination thereof; and said inorganic particle (130) is selected from the group consisting of titania, zirconia, silica, zirconium silicate, zinc oxide, zinc silicate, alumino-silicate, fumed silica, hollow glass bubbles, glass beads, glass flakes or their combinations thereof;
wherein the frosted article has a total transmission (Tt) ranging between 68% and 91% and a haze value greater than 12% and less than 85%.

2. The frosted glass (100) as claimed in claim 1, wherein the frosting composition (120) covers at least 5% of the total surface area of the glass substrate (110).

3. The frosted glass (100) as claimed in claim 1, wherein the inorganic particle (130) is selected from the group consisting of fumed silica, hollow glass bubbles, or their combinations thereof.

4. The frosted glass (100) as claimed in claim 1, wherein the size of the inorganic particle (130) is greater than 50 nm and less than 50 microns.

5. The frosted glass (100) as claimed in claim 1, wherein the inorganic particle (130) is optionally treated with a surface modifying agent.

6. The frosted glass (100) as claimed in claim 1, wherein the polymer (140) is selected from the group consisting of poly-urethane, poly-isocyanate, phenol-formaldehyde resins, or their combinations thereof.

7. The frosted glass (100) as claimed in claim 1, wherein the polymer (140) is thermally or UV curable.

8. The frosted glass (100) as claimed in claim 1, wherein the solvent is selected from the group consisting of xylene, acetic acid, acetates, butyl acetate, isopropyl alcohol, ketonic alcohols, ketones, mineral spirits, esters, toluene, diacetone alcohol or their combinations thereof.

9. The frosted glass (100) as claimed in claim 1, wherein the frosting composition (120) further comprises a curing agent, a dispersant, a surfactant, flow additives or functional additives.

10. The frosted glass (100) as claimed in claim 1, wherein the frosting composition (120) has a dry thickness ranging between 10 to 100 µm.

11. The frosted glass (100) as claimed in claim 1 has a contact angle ranging between 65° and 80°.

12. The frosted glass (100) as claimed in claim 1 exhibits no loss in haze value while in contact with water or other liquid materials.

13. A method (200) of manufacturing a frosted article (100) as claimed in claim 1 comprising the steps of:
cleaning and polishing a glass substrate using ceria or similar abrasive particle based colloidal solutions;
pre-treating the glass substrate using a silane coating;
coating a frosting composition (120) as claimed in claim 1 over a surface of the glass substrate;
drying the coated glass substrate; and
curing the coated glass substrate, wherein the coating is applied using a technique selected from the group of knife-edge coating, Meyer rod coating, screen-printing, spray coating, gravure coating, dip coating, slot-die coating, flood coating, curtain coating or roller coating.

## Patentansprüche

1. Mattiertes Erzeugnis (100), umfassend:
ein Glassubstrat (110); und
eine Mattierungszusammensetzung (120), die direkt auf mindestens eine Oberfläche des Glassubstrats (110) aufgetragen wird, wobei die Mattierungszusammensetzung (120) zu bis zu 50 Gewichtsteilen einen anorganischen Partikel (130) umfasst, der in einem Polymer (140) eingebettet ist, basierend auf weniger als zu etwa 50 Gewichtsteilen einem Lösungsmittel, **dadurch gekennzeichnet, dass** das Polymer (140) aus der Gruppe ausgewählt ist, bestehend aus Polyacrylat, Polyurethan, Polyisocyanat, Silicon, Epoxid, Olefinen, Estern Phenolformaldehydharzen, Phenolen, Aminen, Carbonsäuren, Anhydriden Melaminformaldehyd, Polyolen, Acrylpolyol oder ihrer Kombination davon; und der anorganische Partikel (130) aus der Gruppe ausgewählt ist, bestehend aus Titandioxid, Zirconiumdioxid, Silicat, Zirconiumsilicat, Zinkoxid, Zinksilicat, Aluminiumsilicat, pyrogener Kieselsäure, Hohlglasblasen, Glaskugeln, Glasplättchen oder ihren Kombinationen davon;
wobei das mattierte Erzeugnis eine Gesamtdurchlässigkeit (Tt), die von zwischen 68 % und 91 % reicht, und einen Haze-Wert von über 12 % und weniger als 85 % aufweist.

2. Mattglas (100) nach Anspruch 1, wobei die Mattierungszusammensetzung (120) mindestens 5 % der Gesamtoberfläche des Glassubstrats (110) bedeckt.

3. Mattglas (100) nach Anspruch 1, wobei der anorganische Partikel (130) aus der Gruppe ausgewählt ist, bestehend aus pyrogener Kieselsäure, Hohlglasblasen oder ihren Kombinationen davon.

4. Mattglas (100) nach Anspruch 1, wobei die Größe des anorganischen Partikels (130) über 50 nm und kleiner als 50 Mikrometer ist.

5. Mattglas (100) nach Anspruch 1, wobei der anorganische Partikel (130) optional mit einem Oberflächenmodifiziermittel behandelt wird.

6. Mattglas (100) nach Anspruch 1, wobei das Polymer (140) aus der Gruppe ausgewählt ist, bestehend aus Polyurethan, Polyisocyanat, Phenolformaldehydharzen oder ihren Kombinationen davon.

7. Mattglas (100) nach Anspruch 1, wobei das Polymer (140) thermisch oder UV-härtbar ist.

8. Mattglas (100) nach Anspruch 1, wobei das Lösungsmittel aus der Gruppe ausgewählt ist, bestehend aus Xylol, Essigsäure, Acetaten, Butylacetat, Isopropylalkohol, Ketonalkoholen, Ketonen, Lösungsbenzin, Estern, Toluol, Diacetonalkohol oder ihren Kombinationen davon.

9. Mattglas (100) nach Anspruch 1, wobei die Mattierungszusammensetzung (120) ferner ein Härtungsmittel, ein Dispergiermittel, ein Tensid, Durchflussadditive oder funktionelle Additive umfasst.

10. Mattglas (100) nach Anspruch 1, wobei die Mattierungszusammensetzung (120) eine Trockendicke aufweist, die von 10 bis 100 µm reicht.

11. Mattglas (100) nach Anspruch 1, das einen Kontaktwinkel aufweist, der von 65° bis 80° reicht.

12. Mattglas (100) nach Anspruch 1, das keinen Verlust an Haze-Wert vorweist, während es mit Wasser oder anderen flüssigen Stoffen in Kontakt kommt.

13. Verfahren (200) zum Herstellen eines mattierten Erzeugnisses (100) nach Anspruch 1, umfassend die Schritte:
Reinigen und Polieren eines Glassubstrats unter Verwendung von Cerdioxid oder ähnlichen abriebpartikelbasierten kolloidalen Lösungen;
Vorbehandeln des Glassubstrats unter Verwendung einer Silanbeschichtung;
Beschichten einer Mattierungszusammensetzung (120) nach Anspruch 1 über eine Oberfläche des Glassubstrats;
Trocknen des beschichteten Glassubstrats; und
Härten des beschichteten Glassubstrats, wobei die Beschichtung unter Verwendung einer Technik aufgetragen wird, die aus der Gruppe von Messerstreichbeschichtung, Meyer-Rod-Beschichtung, Siebdruck, Sprühbeschichtung, Gravurstreichbeschichtung, Tauchbeschichtung, Schlitzdüsenbeschichtung, Flutlackierung, Gießlackierung oder Walzenbeschichtung ausgewählt ist.

## Revendications

1. Article dépoli (100) comprenant :
un substrat de verre (110) ; et
une composition de dépolissage (120) appliquée directement sur au moins une surface du substrat de verre (110), dans lequel la composition de dépolissage (120) comprend jusqu'à 50 parties en poids d'une particule inorganique (130) incorporée dans un polymère (140) sur la base de moins d'environ 50 parties en poids d'un solvant, **caractérisé en ce que** ledit polymère (140) est choisi dans le groupe constitué de polyacrylate, polyuréthane, polyisocyanate, silicone, époxy, oléfines, esters résines phénol-formaldéhyde, phénols, amines, acides carboxyliques, anhydrides mélamine formaldéhyde, polyols, polyol acrylique ou leur combinaison ; et ladite particule inorganique (130) est choisie dans le groupe constitué d'oxyde de titane, zircone, silice, silicate de zirconium, oxyde de zinc, silicate de zinc, alumino-silicate, silice sublimée, bulles de verre creuses, billes de verre, paillettes de verre ou leurs combinaisons ;
dans lequel l'article dépoli a une transmission totale (Tt) comprise dans une plage entre 68 % et 91 % et une valeur de trouble supérieure à 12 % et inférieure à 85 %.

2. Verre dépoli (100) selon la revendication 1, dans lequel la composition de dépolissage (120) recouvre au moins 5 % de la surface totale du substrat de verre (110).

3. Verre dépoli (100) selon la revendication 1, dans lequel la particule inorganique (130) est choisie dans le groupe constitué de silice sublimée, bulles de verre creuses, ou leurs combinaisons.

4. Verre dépoli (100) selon la revendication 1, dans lequel la taille de la particule inorganique (130) est supérieure à 50 nm et inférieure à 50 microns.

5. Verre dépoli (100) selon la revendication 1, dans lequel la particule inorganique (130) est facultativement traitée avec un agent de modification de surface.

6. Verre dépoli (100) selon la revendication 1, dans lequel le polymère (140) est choisi dans le groupe constitué de polyuréthane, polyisocyanate, résines phénol-formaldéhyde, ou leurs combinaisons.

7. Verre dépoli (100) selon la revendication 1, dans lequel le polymère (140) est durcissable thermiquement ou aux UV.

8. Verre dépoli (100) selon la revendication 1, dans lequel le solvant est choisi dans le groupe constitué de xylène, acide acétique, acétates, acétate de butyle, alcool isopropylique, alcools cétoniques, cétones, essences minérales, esters, toluène, diacétone alcool ou leurs combinaisons.

9. Verre dépoli (100) selon la revendication 1, dans lequel la composition de dépolissage (120) comprend en outre un agent de durcissement, un dispersant, un agent tensioactif, des additifs d'écoulement ou des additifs fonctionnels.

10. Verre dépoli (100) selon la revendication 1, dans lequel la composition de dépolissage (120) a une épaisseur sèche comprise dans une plage entre 10 et 100 µm.

11. Verre dépoli (100) selon la revendication 1, ayant un angle de contact compris dans une plage entre 65° et 80°.

12. Verre dépoli (100) selon la revendication 1, ne présentant aucune perte de valeur de trouble tout en étant en contact avec de l'eau ou d'autres matériaux liquides.

13. Procédé (200) de fabrication d'un article dépoli (100) selon la revendication 1 comprenant les étapes de :
nettoyage et polissage d'un substrat de verre à l'aide de solutions colloïdales à base d'oxyde de cérium ou de particules abrasives similaires ;
prétraitement du substrat de verre à l'aide d'un revêtement de silane ;
revêtement d'une composition de dépolissage (120) selon la revendication 1 sur une surface du substrat de verre ;
séchage du substrat de verre revêtu ; et
durcissement du substrat de verre revêtu, dans lequel le revêtement est appliqué à l'aide d'une technique choisie dans le groupe constitué de revêtement par lame de couteau, revêtement par barre de Meyer, sérigraphie, revêtement par pulvérisation, revêtement par gravure, revêtement par immersion, revêtement par filière droite plate, vernissage total, revêtement à la machine à rideau ou revêtement au rouleau.
